# EUROPÄISCHE PATENTSCHRIFT

(11) **EP 2 208 243 B1**
(45) Veröffentlichungstag und Bekanntmachung des Hinweises auf die Patenterteilung: **13.08.2014**
(21) Anmeldenummer: 08847048.9
(22) Anmeldetag: 03.11.2008
(51) Int. Cl.: H01L 41/09

(54) **ULTRASCHALLLINEARANTRIEB MIT HOHLZYLINDRISCHEM OSZILLATOR**
ULTRASONIC LINEAR DRIVE UNIT COMPRISING A HOLLOW CYLINDRICAL OSCILLATOR
MÉCANISME D'ENTRAÎNEMENT LINÉAIRE ULTRASONORE COMPRENANT UN OSCILLATEUR EN FORME DE CYLINDRE CREUX

(30) Priorität: 08.11.2007 DE 102007053335; 14.05.2008 DE 102008023478
(43) Veröffentlichungstag der Anmeldung: 21.07.2010
(73) Patentinhaber: Physik Instrumente (PI) GmbH & Co. KG, 76228 Karlsruhe (DE)
(72) Erfinder: WISCHNEWSKIJ, Wladimir, 76337 Waldbronn (DE); WISCHNEWSKIJ, Alexej, 76744Wörth (DE)
(74) Vertreter: Meissner, Bolte & Partner GbR
(86) Internationale Anmeldenummer: PCT/EP2008/064847
(87) Internationale Veröffentlichungsnummer: WO 2009/059939

(56) Entgegenhaltungen:
- EP-A- 0 359 875
- DE-A1-102004 059 429
- US-A- 5 633 553

## Beschreibung

Die vorliegende Erfindung betrifft ein lineares Ultraschallantriebssystem gemäß dem Oberbegriff des Anspruches 1, das aus einem antreibenden Element als Ultraschalloszillator mit zwei Generatoren für Ultraschallschwingungen und einem angetriebenen Element, das einen Friktionskontakt mit dem antreibenden Element bildet und einer elektrischen Erregerquelle des antreibenden Elements besteht. Derartige Ultraschalllinearantriebe eignen sich für den Einsatz in mobilen Endbenutzergeräten wie beispielsweise in Kameras, Mobiltelefonen oder ähnlichen miniaturisierten Geräten, um u.a. die positionssgesteuerte Ausrichtung von optischen Systemen zu ermöglichen.

Ultraschallantriebssysteme sind aus dem Stand der Technik bekannt. So offenbart die Druckschrift US 5,633,553 einen Ultraschalllinearantrieb für optische Systeme, bei dem ein zylindrisch geformter Ultraschalloszillator das Antriebselement bildet, welches einen scheibenförmigen Rotor dreht. Mittels eines Zahnrad-Schraubengetriebes erfolgt in dem Antrieb die Transformation der Drehbewegung des Rotors in eine Vorwärtsbewegung des beweglichen Elementes. Das eingesetzte Zahnrad-Schraubengetriebe führt zu einer Erhöhung des durch den Antrieb beanspruchten Volumens. Dies erschwert die Konstruktion und die Miniaturisierung des Geräts, vergrößert die Reibungsverluste, erhöht den akustischen Geräuschpegel und steigert die Herstellungskosten eines solchen Antriebes.

In der europäischen Patentanmeldung EP 0 359 875 A1 wird beispielsweise von einer Ultraschallantriebsanordnung ausgegangen, welche einen Stator einen Rotor und eine Wechselstromversorgung aufweist. Der Stator umfasst einen hohlen zylindrischen piezoelektrischen Schwinger, wobei an der Innen- und Aussenseite des Schwingers geteilte Elektroden angebracht sind. Die Elektroden sind mittels Zwischenräumen voneinander getrennt. Im Wechselstrombetrieb wird somit eine fortschreitende Welle zum Antrieb des Rotors erzeugt.

Aus der Druckschrift DE 10 2004 059 429 B4 ist ein Ultraschallinearmotor für optische Systeme bekannt, bei dem ein plattenförmiger Ultraschalloszillator das Antriebselement bildet. Die beweglichen Elemente des Ultraschalllinearmotors werden von Läufern gebildet, die sich linear auf den Seitenflächen des Ultraschalloszillators bewegen und damit die Linearbewegung an das bewegliche Element des Geräts übertragen.

Der Nachteil dieses Ultraschalllinearantriebs besteht darin, dass der plattenförmige Ultraschalloszillator ein relativ großes Volumen beansprucht. Es trägt ca. 1/3 bis 1/ 4 des Volumens des optischen Systems. Zudem muss bei diesem Antrieb die Höhe des Ultraschalloszillators gleich oder größer als die dreifache Länge der Stößel sein. Dadurch vergrößert sich die Bauhöhe des optischen Systems. Dies begrenzt die Möglichkeiten zur Miniaturisierung des optischen Systems, so dass derartige Antriebe nicht in flachen und mobilen Endbenutzergeräten wie beispielsweise in Mobiltelefonen und ähnlichen Geräten eingesetzt werden können, die oftmals Gehäusehöhen von weniger als 8 mm aufweisen.

Außerdem verfügt ein solcher Antrieb nur über eine geringe Haltekraft. Dies hat zur Folge, dass bereits bei der Einwirkung von kleinen äußeren Stößen eine Verschiebung der Läufer erfolgt. Dies bewirkt eine Defokussierung des optischen Systems, d.h. eine Verringerung der Betriebssicherheit des Antriebs. Aus diesem Grund sind entsprechende Geräte bei auftretenden Erschütterungen oftmals nur eingeschränkt oder gar nicht verwendbar, was die Einsatzmöglichkeiten von Ultraschallantriebssystemen einschränkt.

Darüber hinaus weisen die in diesen Antrieben eingesetzten Ultraschalloszillatoren eine hohe Betriebsfrequenz auf, die im Bereich von 300 bis 1200 KHz liegt. Die Schwingungsamplitude liegt bei diesen hohen Frequenzen im Bereich zwischen 0,4 bis 0,1 Mikrometer. Bei derart kleinen Schwingungsamplituden können deshalb polierte Läufer eingesetzt werden, die aus harten Materialien wie beispielsweise aus Stahl, Glas oder Keramik gefertigt sind. Die Technologie zur Herstellung solcher Läufer ist jedoch kompliziert, was diese Läufer relativ teuer werden lässt und damit zu erhöhten Herstellungskosten der Antriebe selbst führt. Zudem haben kleine Erregerpegel der Oszillatoren mit entsprechend kleinen Schwingungsamplituden der Ultraschalloszillatoren einen negativen Einfluss auf die Gleichmäßigkeit der Bewegung der Läufer. Dadurch verringert sich auch die Genauigkeit in der Positionierung des Antriebs. Außerdem vergrößern sich durch die hohen Betriebsfrequenzen der Ultraschalloszillatoren die Verluste im elektrischen Erregerteil des Ultraschalloszillators.

Das Ziel der vorliegenden Erfindung besteht deshalb darin, das Volumen der Antriebsvorrichtung und dessen Bauhöhe zu verringern und eine größere Haltekraft, eine höhere Genauigkeit beim Anhalten, sowie eine höhere Zuverlässigkeit im Betrieb sicherzustellen. Weitere Ziele der vorliegenden Erfindung sind die Bereitstellung einer einfacheren Technologie zur kostengünstigen Herstellung derartiger Ultraschalllinearantriebe, die Verringerung von elektrischen Verlusten im elektrischen Erregerteil und eine Reduzierung der akustischen Geräusche im Betrieb, so dass derartig verbesserte Ultraschalllinearantriebe in einem größeren Anwendungsbereich als bisher eingesetzt werden können.

Der vorliegenden Erfindung liegt deshalb die Aufgabe zugrunde, einen Ultraschalllinearantrieb der eingangs genannten Art derart weiterzubilden, dass die aus dem Stand der Technik bekannten und oben diskutierten Probleme und Nachteile reduziert werden und der Ultraschalllinearantrieb bei einfacherer Ausführung neue und vorteilhafte Eigenschaften enthält.

Diese Aufgabe wird erfindungsgemäß durch einen Ultraschalllinearantrieb der eingangs genannten Art gelöst, bei dem der Ultraschalloszillator als hohler dünnwandiger piezoelektrischer Zylinder ausgeführt ist, dessen Höhe H gleich oder kleiner seinem mittleren Durchmesser D ist, und die Generatoren für Ultraschallschwingungen symmetrisch zu beiden Seiten bezogen auf die Schnittebene S, die durch die Mitte der Höhe des Ultraschalloszillators senkrecht zu seiner Achslinie L verläuft, angeordnet sind, und wobei das antreibende Element mit seiner Zylinderoberfläche in Kontakt mit dem angetriebenen Element steht, und die elektrische Erregerquelle derart mit dem Ultraschalllinearantrieb verbunden ist, dass dieses nur den ersten oder den zweiten Generator für Ultraschallschwingungen anregt.

Bevorzugte Weiterbildungen der Erfindung sind in den Unteransprüchen 2 bis 16 angegeben.

Für den erfindungsgemäßen Ultraschalllinearantrieb sind vorzugsweise zwei unterschiedliche Ausführungsformen vorgesehen, mit denen alle nachfolgenden und vorteilhaften Ausführungsformen des erfindungsgemäßen Antriebs ausgestattet werden können. Dabei kann im erfindungsgemäßen Ultraschalllinearantrieb das antreibende Element entsprechend der Merkmale im kennzeichnenden Teil des Patentanspruches 1 einen Friktionskontakt mit dem angetriebenen Element entweder durch seine innere Zylinderoberfläche oder durch seine äußere Zylinderoberfläche eingehen. Dadurch wird die Haltekraft, die Genauigkeit des Antriebs und seine Betriebszuverlässigkeit erhöht.

In einer ersten bevorzugten Ausführungsform des erfindungsgemäßen Antriebs kann jeder der beiden Generatoren für Ultraschallschwingungen als angeregte Ringelektrode und als allgemeine Ringelektrode ausgeführt sein, wobei die Erregerelektroden auf einer der Zylinderoberflächen des radial polarisierten Oszillators symmetrisch auf beiden Seiten der Schnittebene angeordnet sind und die allgemeine Elektrode unter den Erregerelektroden auf der anderen Zylinderoberfläche des Oszillators angeordnet ist. Dies ermöglicht eine Volumenerregung des Oszillators.

Außerdem kann jeder der beiden Generatoren für Ultraschallschwingungen als angeregte Ringelektrode und allgemeine Ringelektrode ausgeführt sein, wobei die Erregerelektroden auf einer der Zylinderoberflächen des längs polarisierten Oszillators nahe zu den Stirnflächen und symmetrisch zur Schnittebene angeordnet sind und die allgemeine Elektrode auf der gleichen Oberfläche des Oszillators im Schnittbereich seiner Schnittebene angeordnet ist. Dies ermöglicht eine Oberflächenerregung des Oszillators.

In einer weiteren vorteilhaften Ausführungsform des Antriebs ist jeder der Generatoren für Ultraschallschwingungen in Form abwechselnd angeordneter streifenförmiger Elektroden ausgeführt, die auf einer Zylinderoberfläche des alternierend in Längsrichtung polarisierten Oszillators angeordnet sind. Durch die Verwendung streifenförmiger Elektroden ist es bei Oberflächenerregung des Oszillators möglich, die erforderliche Erregerspannung zu reduzieren.

In einer anderen vorteilhaften Ausführungsform des Antriebs besteht jeder der Generatoren für Ultraschallschwingungen aus gleichachsig angeordneten scheibenförmigen Elektroden, die sich mit dünnen scheibenförmigen Schichten in Längsrichtung polarisierter piezoelektrischer Keramik abwechseln. Dadurch ist es möglich, die Erregungseffizienz bei gleichzeitiger Verringerung der Erregerspannung zu vergrößern.

In einer weiteren vorteilhaften Ausführungsform des Antriebs kann jeder der Generatoren für Ultraschallschwingungen aus einer geraden Zahl sich abwechselnder aktiver und passiver Sektionen bestehen. Dadurch ist es möglich, im Oszillator Biegeschwingungen zu erzeugen, was die Funktion des Antriebs verbessert. Zusätzlich kann der Ultraschalloszillator auf einer seiner Zylinderoberflächen eine abriebfeste Schicht aufweisen, die einen Friktionskontakt mit dem angetriebenen Element eingeht oder der Ultraschalloszillator kann ein oder zwei ringförmige Friktionselemente aufweisen, mit denen er einen Friktionskontakt mit dem angetriebenen Element bildet oder der Ultraschalloszillator kann eine oder mehrere segmentförmige Friktionselemente aufweisen, mit denen er mit dem angetriebenen Element einen Friktionskontakt bildet. Dies ermöglicht es, die Arbeitsressourcen des Antriebs zu erhöhen.

In allen aufgeführten und vorteilhaften Ausführungsformen des Ultraschalllinearantriebs kann das angetriebene Element die Form eines Rundstabes oder einer Röhre aufweisen oder Teile des Rundstabes oder der Röhre bzw. des längs geschnittenen Rundstabes oder der längs geschnittenen Röhre oder längs geschnittener Teile des Rundstabes oder längs geschnittener Teile des Rohres können diese oder eine andere geeignete Form haben. Dies erweitert die konstruktiven Gestaltungsmöglichkeiten für den Antrieb.

In einer weiteren vorteilhaften Ausführungsform des erfindungsgemäßen Antriebs kann das angetriebene Element aus einem abriebfesten Kunststoff hergestellt sein. Dies führt zu einer Vereinfachung der Technologie zu der Herstellung des Antriebs.

Als eine mögliche bevorzugte Ausführungsform des erfindungsgemäßen Antriebs ist es vorgesehen, dass im Inneren des angetriebenen Elementes oder des antreibenden Elementes auch eine optische Linse oder eine optische Linsengruppe oder ein anderes bewegliches Teil des Gerätes angeordnet sein kann. Dies erweitert die Einsatzmöglichkeiten für den Antrieb.

Des Weiteren kann in einer vorteilhaften Ausführungsform des erfindungsgemäßen Antriebs die Erregerquelle für das antreibende Element als selbst erregender Generator ausgeführt werden, dessen Erregerfrequenz durch die Resonanzfrequenz des mit ihm verbundenen Generators für Ultraschallschwingungen des erregten Oszillators vorgegeben wird. Dadurch ist es möglich, die Funktion des Antriebs zu stabilisieren.

Außerdem kann der erfindungsgemäße Ultraschalllinearantrieb in einer vorteilhaften Weiterbildung mit einer digitalen Steuereinrichtung für die elektrische Erregerquelle ausgerüstet sein, die die Position des angetriebenen Elementes vorgibt. Auf diese Weise ist es möglich, den Antrieb exakt zu positionieren.

Selbstverständlich sind auch Kombinationen der zuvor beschriebenen vorteilhaften Ausgestaltungen möglich.

Die Erfindung wird nachfolgend anhand von Ausführungsbeispielen beschrieben, die anhand der Figuren näher erläutert werden.

Es zeigen:
- Fig. 1: eine schematische Darstellung des erfindungsgemäßen Ultraschalllinearantriebs;
- Fig. 2: eine erste Ausführungsform des erfindungsgemäßen Antriebs;
- Fig. 3, 4: schematische Darstellungen zur Erläuterung der Oszillatorkonstruktion;
- Fig. 5, 6, 7, 8, 9: weitere Ausführungsformen von Ultraschalloszillatoren
- Fig. 10: die Frequenzabhängigkeiten eines Oszillators;
- Fig. 11: schematische Darstellungen zur Erläuterung des Funktionsprinzips des Ultraschalllinearantriebs;
- Fig. 12: verschiedene Ausführungsformen von Friktionsschichten und von Friktionselementen;
- Fig. 13, 14: verschiedene Ausführungsformen der angetriebenen Elemente;
- Fig. 15, 16, 17: weitere verschiedene Ausführungsformen des erfindungsgemäßen Antriebs;
- Fig. 18: ein optisches Objektiv;
- Fig. 19: eine Blockschaltung der Erregerquelle;
- Fig. 20, 21: eine praktisch realisierte Ausführungsform der Erregerquelle;
- Fig. 22: eine Blockschaltung des Antriebs mit digitaler Steuereinrichtung der Erregerquelle.

### Ausführungsform

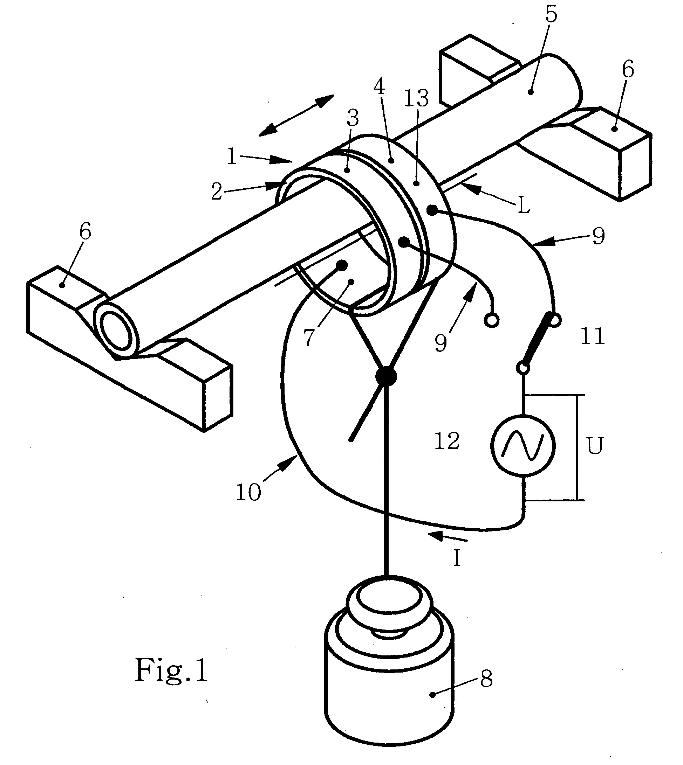

Fig. 1 zeigt eine schematische Darstellung des erfindungsgemäßen Ultraschalllinearantriebs zur Erläuterung der konstruktiven Ausführung. Der Antrieb enthält das antreibende Element 1, ausgeführt als Ultraschalloszillator 2 mit zwei Generatoren für Ultraschallschwingungen 3, 4 und dem auf zwei Stützen 6 angeordneten angetriebenem Element 5. Das antreibende Element 1 bildet einen Friktionskontakt mit der inneren Zylinderoberfläche 7 des angetriebenen Elements 5, die zugleich die innere Zylinderoberfläche des Oszillators 2 darstellt. Das antreibende Element 1 wird durch die Last 8 an das angetriebene Element 5 gepresst.

Jeder der Generatoren für Ultraschallschwingungen 3 und 4 ist mittels der Anschlüsse 9, 10 über den Richtungswahlschalter 11 mit der elektrischen Erregerquelle 12 verbunden. Dabei ist der Richtungswahlschalter 11 so ausgeführt, dass es der Erregerquelle 12 nur möglich ist, entweder den Generator 3 oder den Generator 4 anzuregen. Die elektrische Erregerspannung U wird nur an den Generator 3 oder Generator 4 gelegt. Dabei fließt durch den Generator 3 oder 4 der Strom I.

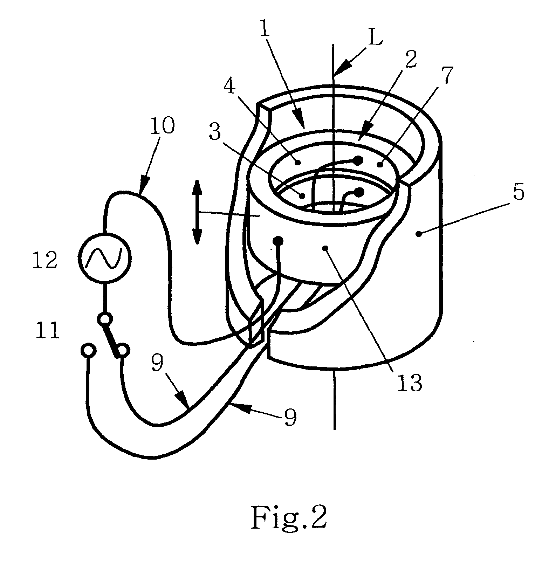

Fig. 2 zeigt eine erste Ausführungsform des erfindungsgemäßen Antriebs, in dem das antreibende Element 1 einen Friktionskontakt mit der äußeren Zylinderoberfläche 13 des angetriebenen Elements 5 eingeht, die zugleich die äußere Zylinderoberfläche des Oszillators 2 bildet. Dabei wird die Anpresskraft des antreibenden Elements 1 an das angetriebene Element 5 durch die Spannkraft des angetriebenen Elements 5 erzeugt.

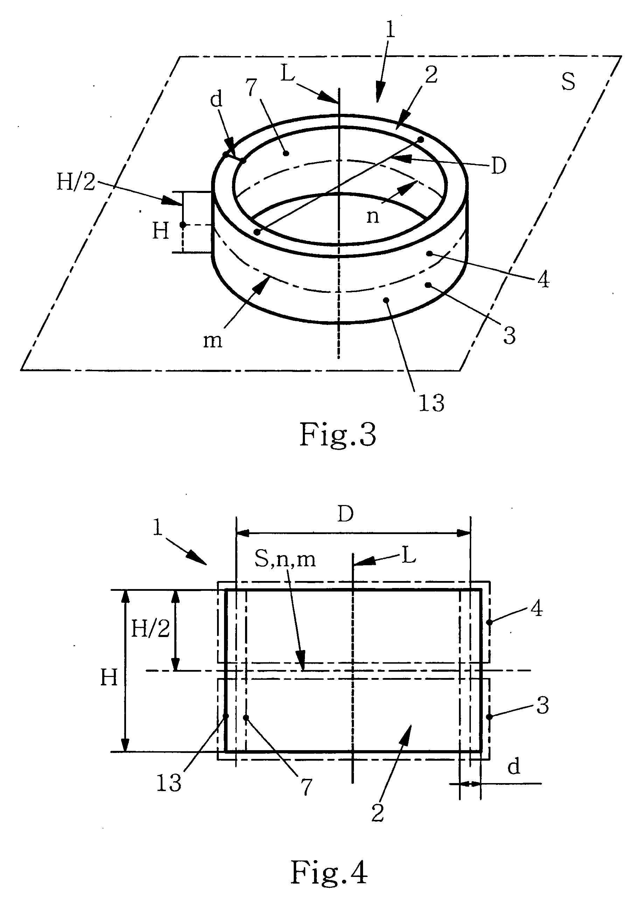

In der erfindungsgemäßen Ausführungsform ist das antreibende Element 1, d.h. der Oszillator 2 als hohler dünnwandiger piezoelektrischer Zylinder ausgeführt, dessen Höhe H gleich oder kleiner als der mittlere Durchmesser D ist, so wie dies die Fig. 3 und 4 zeigen. Praktisch kann die Höhe H im Bereich von H=D bis H=D/5 variieren. Jedoch ist ein Antrieb mit einer Höhe kleiner D/5 technologisch schwer realisierbar.

Unter dem Begriff eines dünnwandigen Zylinders versteht man, dass die Wanddicke d des Zylinders etwa 5 - 20 mal kleiner als sein mittlerer Durchmesser D ist. Der dünnwandige piezoelektrische Zylinder des Oszillators 2, d.h. das antreibende Element 1 weist eine Mittellinie L auf. Die Generatoren für Ultraschallschwingungen 3 und 4 sind auf dem Ultraschalloszillator 2 symmetrisch, bezogen zur Schnittebene S, die durch die Mitte der Höhe H des Oszillators 2 und senkrecht zu seiner Achslinie L verläuft, angeordnet.

In den Fig. 3 und 4 zeigen die strichpunktierten Linien m und n die Markierungen für die Schnittlinie mit der Schnittebene S des Oszillators 2.

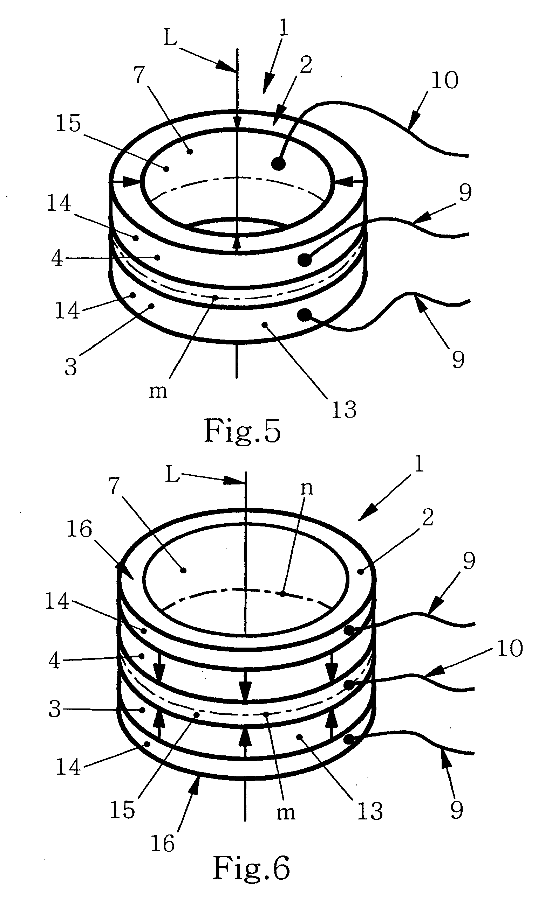

Fig. 5 und 6 zeigen, dass jeder der Generatoren für Ultraschallschwingungen 3 und 4 als dünne ringförmige Erregerelektrode 14 und der allgemeinen Elektrode 15 zwischen diesen Elektroden als piezoelektrisch angeordnete Keramik ausgeführt werden kann. Solche Elektroden können beispielsweise durch Aufdampfen von Chrom-Kupfer-Nickel-Schichten, chemischer Abscheidung oder durch Einbrennen von Silber auf die Zylinderoberflächen 7, 13 des Oszillators 2 erzeugt werden.

Fig. 5 zeigt eine weitere Ausführungsform des Oszillators 2, bei der die Erregerelektroden 14 symmetrisch auf beiden Seiten der Schnittebene S auf der äußeren Zylinderoberfläche angeordnet sind. Die allgemeine Elektrode 15 ist dabei auf der inneren Zylinderoberfläche 7 des Oszillators 2 unter den Erregerelektroden 14 angeordnet.

Wie aus der Fig. 5 außerdem ersichtlich, können bei dem Oszillator 2 die Erregerelektroden 14 auf seiner inneren Zylinderoberfläche 7 und die allgemeine Elektrode 15 auf der äußeren Zylinderoberfläche 13 (in der Fig. 5 nicht dargestellt) angeordnet werden. In beiden Fällen muss dann die Polarisation der Piezokeramik des Oszillators 2, wie in Fig. 5 mit Pfeilen dargestellt, radial gerichtet erfolgen.

Fig. 6 ist zu entnehmen, dass die Erregerelektroden 14 auf der äußeren Zylinderoberfläche 13 des Oszillators 2 nah zu seinen Stirnflächen 16 angeordnet werden können, wobei sich die allgemeine Elektrode 15 auf der gleichen Oberfläche an der Schnittstelle des Oszillators 2 mit der Schnittebene S, Linie m befindet. Alternativ können die Erregerelektroden 14 auch auf der inneren Zylinderoberfläche 7 des Oszillators 2 nah zu seinen Stirnflächen 16 angeordnet werden. Die allgemeine Elektrode 15 befindet sich auf der gleichen Oberfläche an der Schnittstelle des Oszillators 2 mit der Schnittebene S, Linie n (in der Fig. 6 nicht dargestellt). In diesen beiden Fällen muss die Polarisation der Piezokeramik des Oszillators 2, wie in Fig. 6 mit Pfeilen dargestellt, axial gerichtet erfolgen.

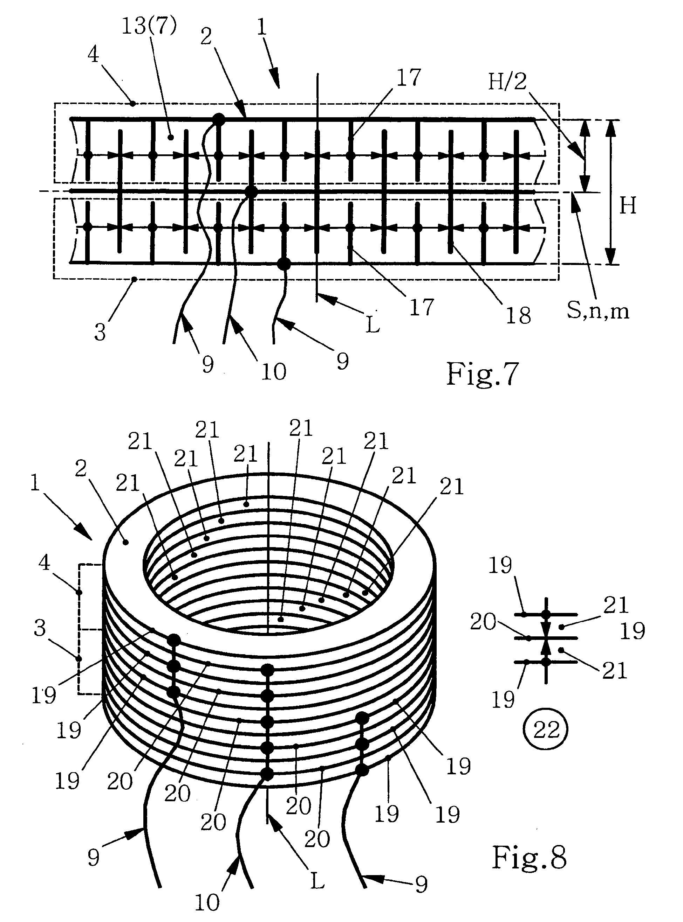

Fig. 7 zeigt eine Ausführungsform des Oszillators 2, bei der die Generatoren für Ultraschallschwingungen 3, 4 als abwechselnd angeordnete streifenförmige Elektroden 17, 18, die auf der äußeren 13 oder der inneren Zylinderoberfläche 7 des Oszillators 2 angeordnet sind, ausgeführt werden können. Fig. 7 zeigt dabei den abgewickelten Mantel der Oberfläche 13 oder der Oberfläche 7 des Oszillators 2.

Die Elektrodenstruktur 17 und 18 kann mittels Photolithographie und anschließender chemischer Ätzung der Elektroden hergestellt werden. Außerdem kann jeder der Generatoren für Ultraschallschwingungen eine Multischichtstruktur aufweisen und aus den gleichachsig angeordneten scheibenförmigen Erregerelektroden 19 und den allgemeinen Elektroden 20 bestehen, die - wie in Fig. 8 dargestellt - sich mit den scheibenförmigen piezokeramischen Schichten 21 abwechseln.

In der Darstellung 22 der Fig. 8 geben die Pfeile die Polarisationsrichtung der piezokeramischen Schichten 21 an. Solche Oszillatoren 2 können mittels der Multischichttechnologie und dem Hochtemperatursintern der Schichten hergestellt werden.

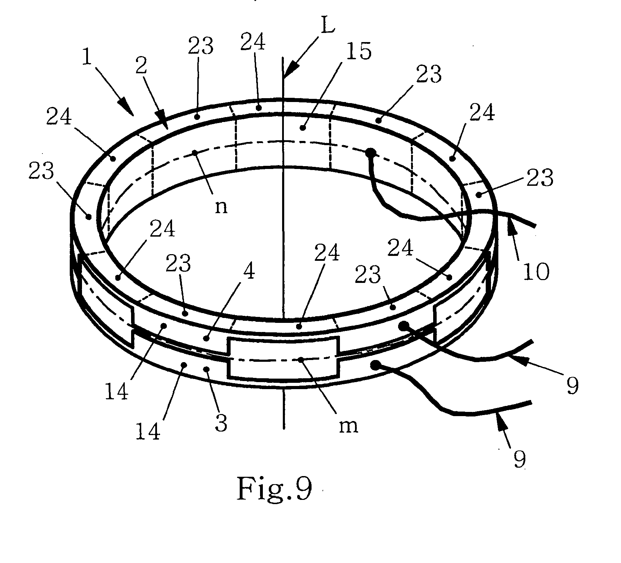

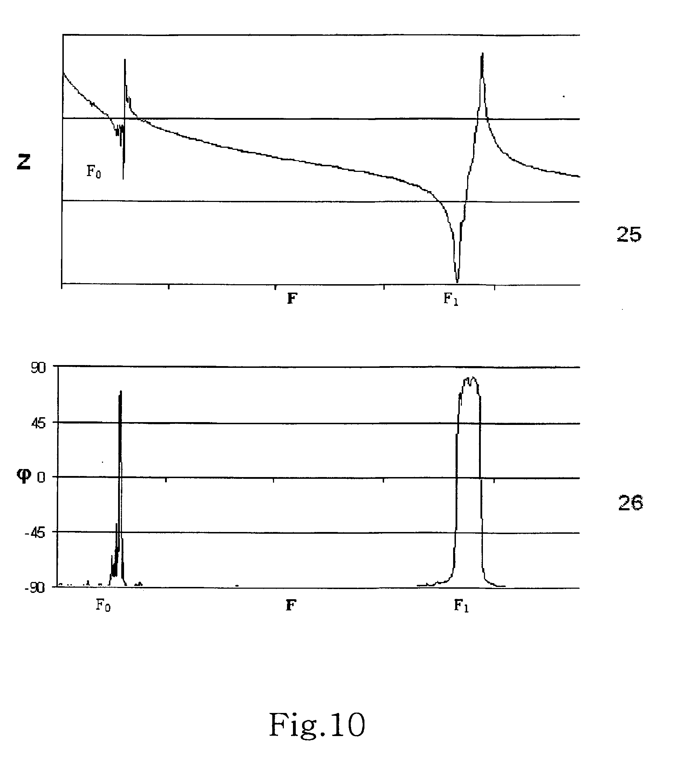

Jeder der Ultraschallgeneratoren 3, 4 kann aus einer geraden Anzahl aktiver 23 und passiver Sektionen 24 bestehen. Ein Beispiel für einen Oszillator 2 mit solchen Generatoren 3 zeigt Fig. 9. Die Darstellung 25 in Fig. 10 zeigt die Frequenzabhängigkeit des Widerstandes Z eines der Generatoren 3 oder 4 des Oszillators 2. Die Darstellung 26 zeigt die Frequenzabhängigkeit der Phasenverschiebung ϕ zwischen der ersten Harmonischen der elektrischen Erregerspannung U und der ersten Harmonischen des Stromes I, der durch den Generator 3 oder 4 fließt. Die in der Fig. 10 dargestellten Abhängigkeiten beziehen sich auf einen Oszillator 2 mit den Abmessungen D=30,5 mm, d=2,5 mm, H=10 mm und hergestellt aus der Piezokeramik LITEC-3. Die untere Resonanzfrequenz Fₒ=41,00 kHz entspricht der Betriebsfrequenz des Oszillators 2, die obere Resonanzfrequenz F₁=191,0 kHz stellt die Resonanzfrequenz der Longitudinalschwingungen bezogen auf die Höhe H des Oszillators 2 dar.

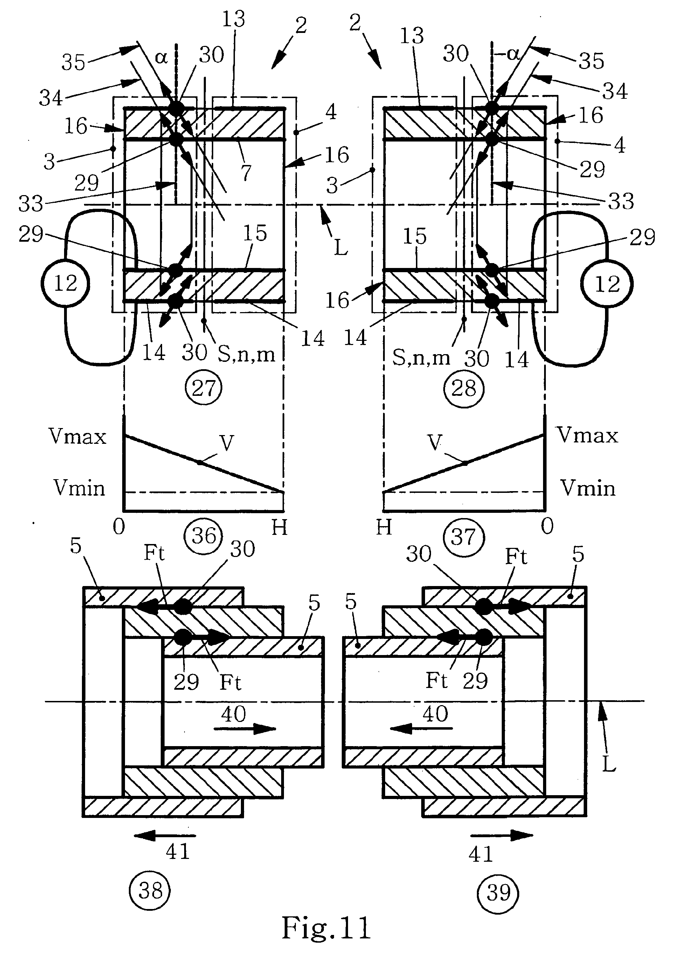

Die Darstellungen 27, 28 der Fig. 11 zeigen die Radialschnitte des Oszillators 2. Im ersten Fall ist die Erregerquelle 12 mit dem Generator 3 verbunden und im zweiten Fall ist die Erregerquelle 12 mit dem Generator 4 des Oszillators 2 verbunden. Die Punkte 29 und 30 stellen Punkte auf der Zylinderoberfläche 7 und 13 des Oszillators 2 dar. Die Pfeile 31 und 32 zeigen die Bewegungsbahnen der Schwingungen der Punkte 29 und 30. Die Linie 33 gibt die Radialrichtung an, die Linie 34, 35 zeigt die Bewegungsrichtung der Punkte 29, 30. Der Winkel α stellt den Neigungswinkel der Linien 34, 35 zur Radialrichtung dar, d.h. zur Linie 33.

In den Darstellungen 36, 37 der Fig. 11 zeigt die strichpunktierte Linie die graphische Abhängigkeit der Schwingungsgeschwindigkeit V der Punkte der Zylinderoberfläche 7 oder 13 des Oszillators 2 von ihrer Position längs zur Höhe H. Das Maximum der Schwingungsgeschwindigkeit Vₘₐₓ befindet sich in der Nähe der Stirnflächen 16 mit den aktiven Generatoren 3 (4) des Oszillators 2. Das Minimum Vₘᵢₙ befindet sich in der Nähe der Stirnflächen 16 mit dem passiven Generator 4 (3) des Oszillators 2.

In den Darstellungen 38, 39 der Fig. 11 geben die Pfeile 40 und 41 die Bewegungsrichtungen des angetriebenen Elementes 5 bei Erregung des Generators 3 oder des Generators 4 an.

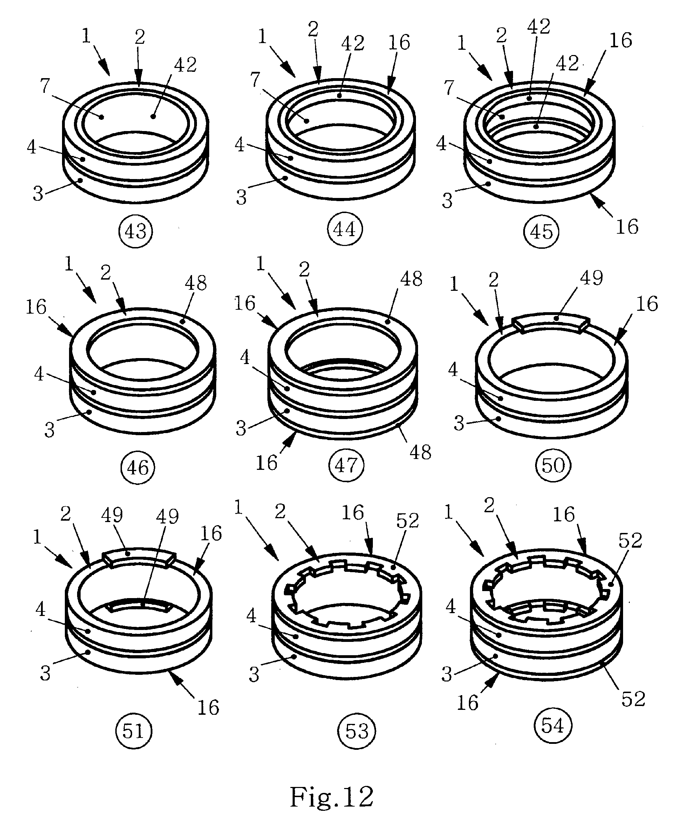

Fig. 12 zeigt, dass der Oszillator 2 in der dargestellten Ausführungsform zur Vermeidung des Friktionsabriebs eine dünne abriebfeste Schicht 42 aufweisen kann, die einen Friktionskontakt mit dem angetriebenen Element 5 bildet (Darstellung 43, Fig. 12). Diese Schicht kann auf der gesamten Oberfläche 13 oder 17 des Oszillators 2 aufgebracht werden. Die Schicht 42 kann nah zu einer der Stirnflächen 16 des Oszillators 2 (Darstellung 44, Fig. 12) oder nah zu den zwei Stirnflächen 16 des Oszillators 2 (Darstellung 45, Fig. 12) angeordnet werden. Diese Schicht kann auch auf der Oberfläche der Elektroden 14 oder 15 aufgetragen werden und kann zugleich die Funktion einer der Elektroden 14 oder 15 übernehmen.
Die Schicht 42 kann einen dünnen, abriebfesten, durch Aufdampfen oder Ausscheiden aus einem Gasmedium mit z.B. Ti, Cr, TiN, TiCN, TiC, CrN, TiAlN, ZrN,TiZrN, TiCrN oder C erzeugten Belag in Form von polykristallinen Diamant aufweisen.

Außerdem kann der Oszillator 2 mit einem (Darstellung 46, Fig. 12) oder zwei (Darstellung 47, Fig. 12) ringförmigen Friktionselementen 48 ausgestattet sein, mit denen er einen Friktionskontakt mit dem angetriebenen Element 5 bildet.

Der Oszillator 2 kann auch segmentförmige Friktionselemente 49 (Darstellung 50, 51, Fig. 12) oder zahnförmige Friktionselemente 52 (Darstellung 53, 54, Fig. 12) aufweisen. Die Friktionselemente 48, 49, 52 können dabei als dünne Plättchen aus Al₂O₃, ZrO₂, Si₃N₄ oder aus einem anderen festen, verschleißarmen Material hergestellt werden.

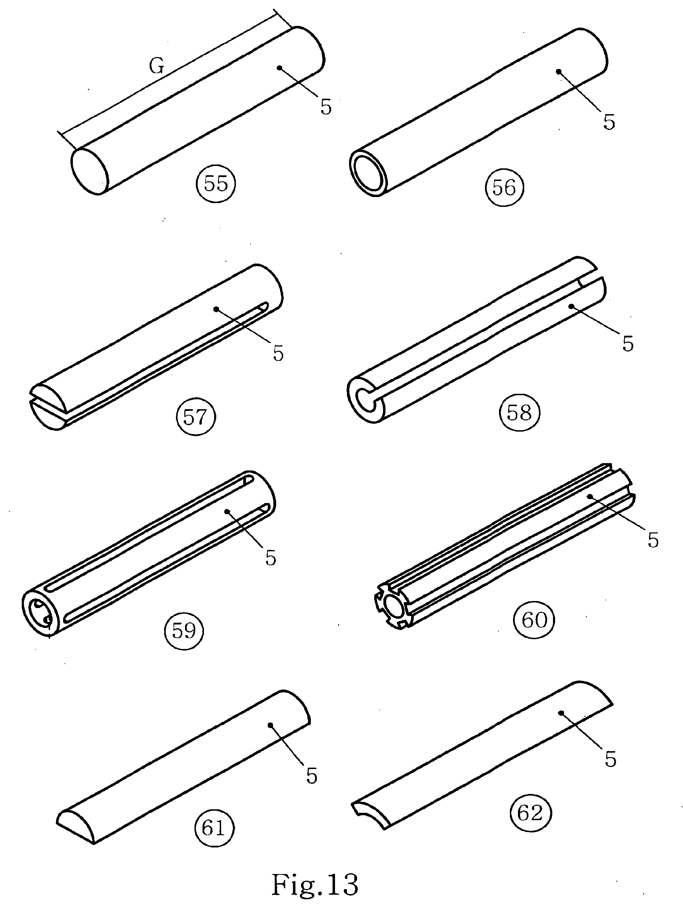

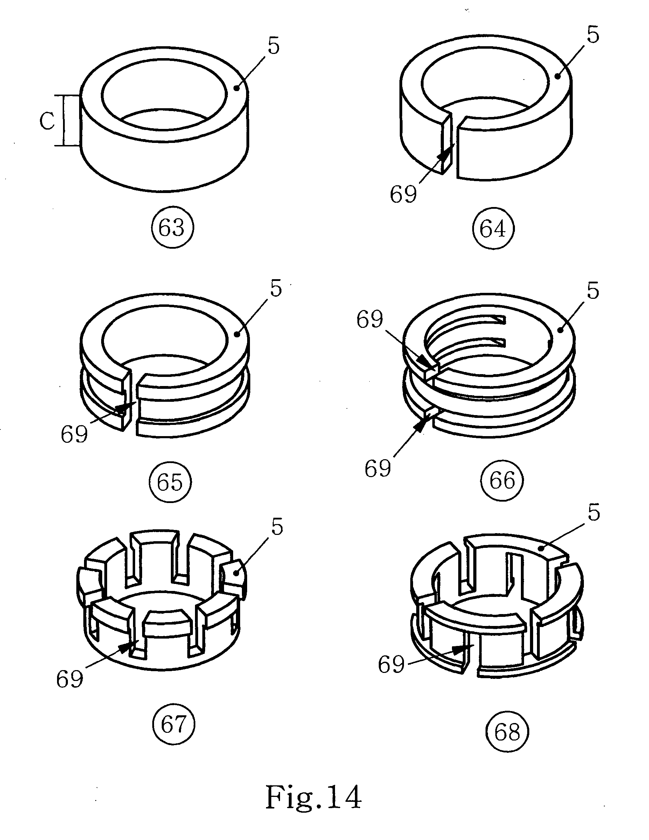

Der erfindungsgemäße Ultraschallantrieb sieht lange (Fig. 13) und kurze (Fig. 14) angetriebene Elemente 5 vor. Im ersten Fall wird die Länge G des angetriebenen Elements 5 so gewählt, dass sie größer als die Höhe H des Oszillators 2 ist. Im zweiten Fall wird die Höhe C des angetriebenen Elements so gewählt, dass sie kleiner als die Höhe H des Oszillators 2 ist. Die langen angetriebenen Elemente 5 (Fig. 13) können die Form eines Rundstabes 55, einer Röhre 56, einer längs geschnittenen Röhre 57, 58, 59, 60 oder eines längs geschnittenen Teils eines Rundstabes 61 oder eines längs geschnittenen Teils einer Röhre 62 haben. Die kurzen angetrieben Elemente (Fig. 14) können die Form eines Teils der Röhre 63 oder von Teilen der Röhre 64, 65, 66, 67, 68 mit unterschiedlicher Form haben, die dieses Teil durch Nuten 69 teilen.

Sowohl die kurzen, als auch die lang ausgebildeten angetriebenen Elemente 5 können aus Kunststoffen hergestellt werden.

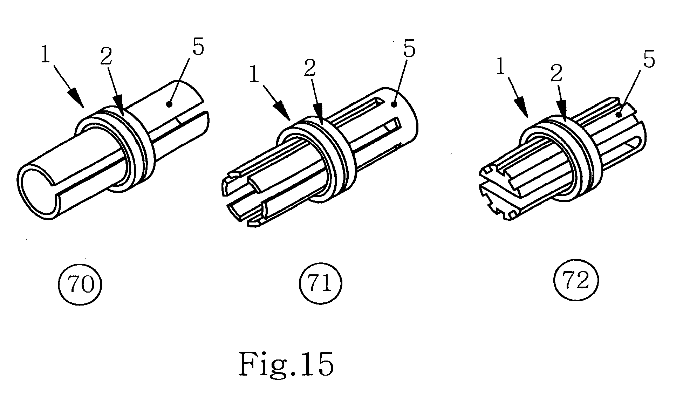

Die Darstellungen 70, 71, 72 in Fig. 15 zeigen konstruktive Ausführungsformen von erfindungsgemäßen Antrieben mit jeweils einem langen angetriebenen Element 5.

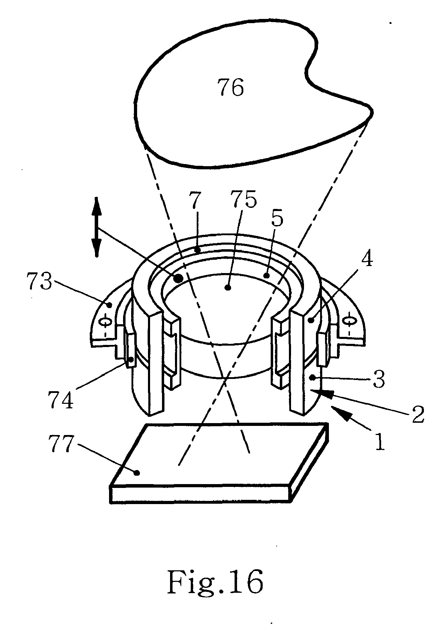

Fig. 16 zeigt die Konstruktion eines erfindungsgemäßen Antriebs mit einem kurzen angetriebenen Element 5. Das antreibende Element 1 bzw. 2 dieses Antriebs wird durch den Halter 73 und die Schall isolierende Zwischenlage 74 festgehalten. Das Element bildet über seine innere Zylinderoberfläche 7 einen Friktionskontakt mit dem angetriebenen Element 5. Im Inneren des angetriebenen Elements 5 kann sich eine optische Linse oder eine Gruppe optischer Linsen 75 befinden, die das optische Objekt 76 auf den optoelektrischen Sensor 77 fokussiert.

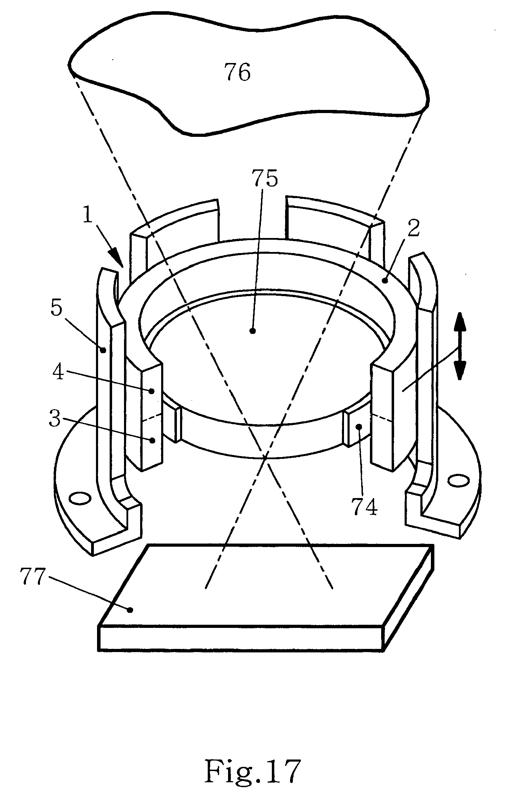

Fig. 17 zeigt eine Ausführungsform eines Antriebs, bei dem das angetriebene Element 5 als unbewegliches und das antreibende Element 1 (2) als bewegliches Teil ausgeführt ist. Im Inneren des antreibenden Elementes kann eine optische Linse 75 angeordnet sein.

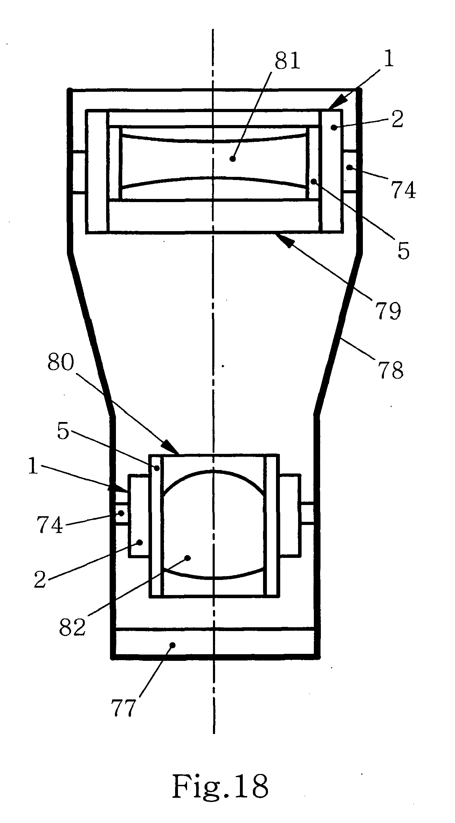

Fig. 18 zeigt ein optisches Objektiv im Gehäuse 78, in dem zwei vorschlagsgemäß ausgeführte Ultraschallantriebe 79 und 80 gleichachsig angeordnet sind. Der Ultraschallantrieb 79 versetzt die fokussierende Gruppe von Linsen 81 und der Ultraschallantrieb 80 die Zoom-Linsengruppe 82 in Bewegung.

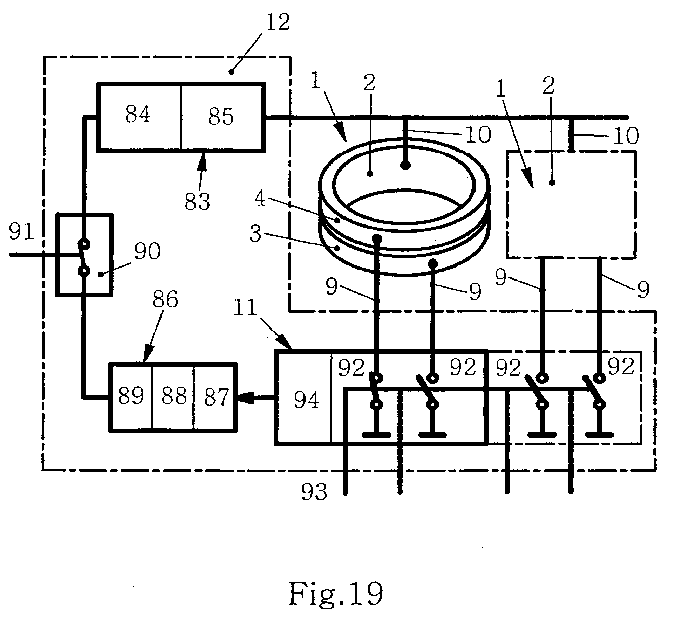

Fig. 19 zeigt eine Blockschaltung einer elektrischen Erregerquelle des antreibenden Elements 1 (Oszillator 2). Die Blockschaltung besteht aus einem Leistungsverstärker 83 mit dem Verstärkerbauteil 84 und dem Abstimmkreis 85, dem Rückkopplungskreis 86 mit dem Filter 87, dem Phasenschieber 88 und dem Signalverstärker des Rückkopplungskreises 89, dem Ausschalter des Rückkopplungskreises 90 mit dem Steuereingang 91, dem Richtungswahlschalter 11 mit Umschalter 92 mit einem oder mehreren Steuereingängen 93 und der Signalquelle des Rückkopplungskreises 94. Die in Fig. 19 dargestellte elektrische Erregerquelle 12 kann zur Erregung eines, zweier oder mehrerer antreibender Elemente 1 eingesetzt werden.

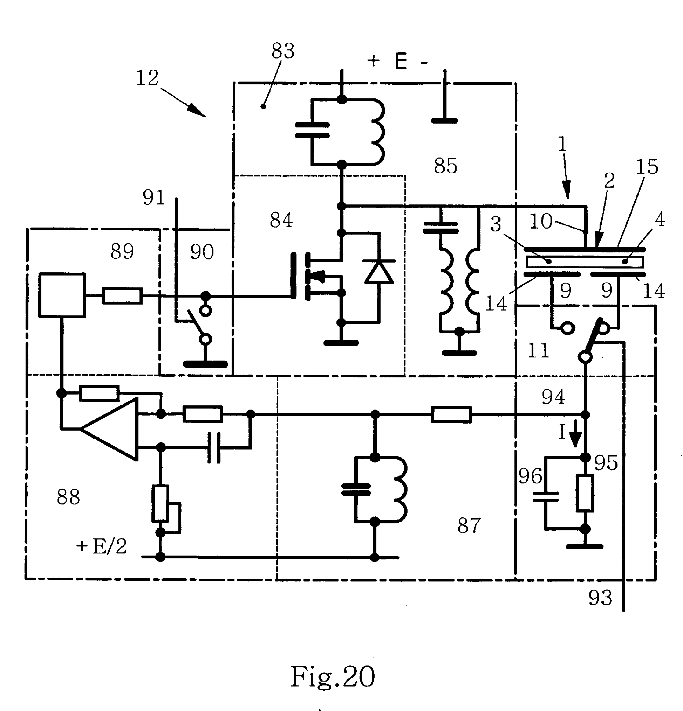

Fig. 20 zeigt eine praktisch realisierte Ausführungsform einer elektrischen Erregerquelle 12. In dieser Variante besteht die Signalquelle des Rückkopplungskreises 94 aus dem parallel geschalteten Widerstand 95 und dem Kondensator 96.

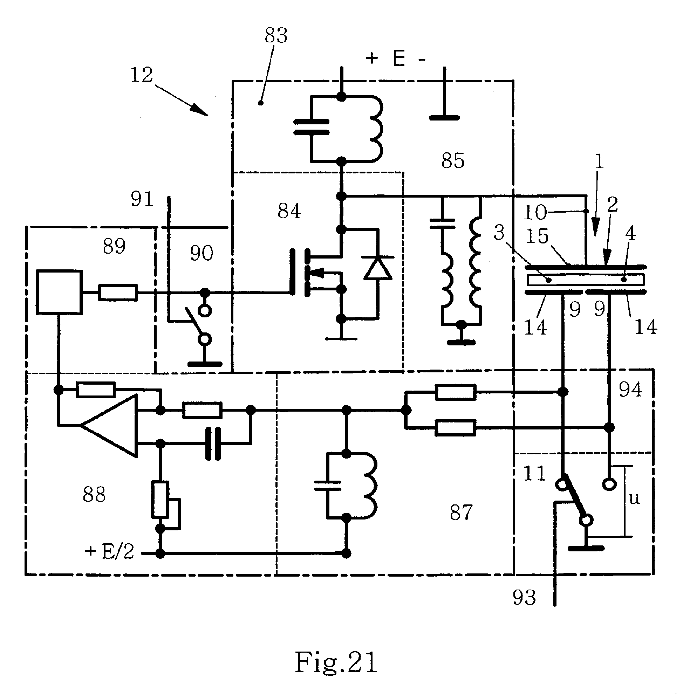

Fig. 21 zeigt eine zweite praktisch realisierte Ausführungsform einer elektrischen Erregerquelle 12. In dieser Variante wird die Signalquelle des Rückkopplungskreises 94 nur aus den Erregerelektroden 14 des Oszillators 2 gebildet.

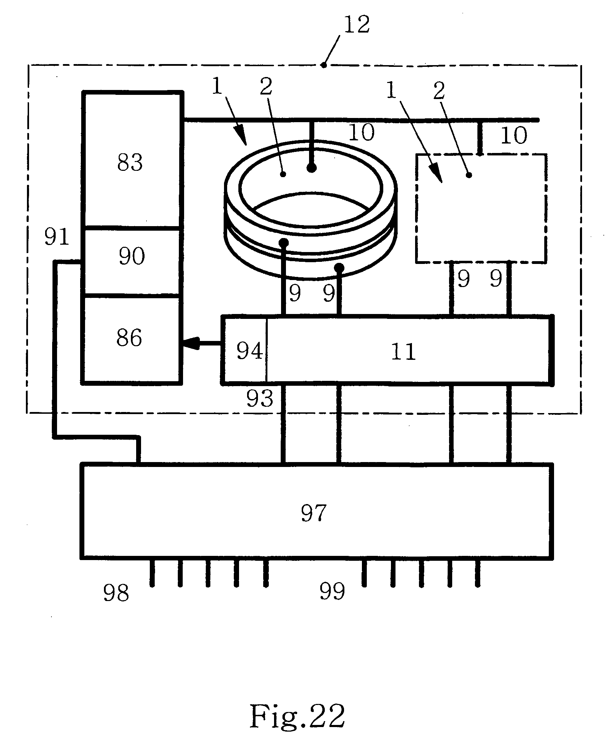

Fig. 22 zeigt eine Variante des erfindungsgemäßen Antriebs, bei dem die elektrische Erregerquelle 12 mit einer digitalen Steuereinrichtung 97 ausgestattet ist, die die Position des antreibenden Elements 1 vorgibt.
Die digitale Steuereinrichtung 97 kann eine oder mehrere Steuereingänge 98 und ein oder mehrere Positionierungseingänge 99 aufweisen, die mit dem optoelektrischen Sensor 77 oder einem Positionsgeber für das angetriebene Element 5 verbunden sind (Positionsgeber in der Fig. 22 nicht dargestellt).

Nachfolgend wird die Funktionsweise des erfindungsgemäßen Ultraschalllinearantriebs näher erläutert.

Die elektrische Erregerquelle 12 stellt die Erregerspannung U bereit, deren Frequenz der Betriebsfrequenz des antreibenden Elements 1 entspricht. Diese Frequenz ist gleich der unteren Resonanzfrequenz Fₒ des zylindrischen Oszillators 1 (siehe Fig. 10). Von der Erregerquelle 12 gelangt die Erregerspannung über den Richtungswahlschalter 11, die Anschlüsse 9 und 10 auf die Elektroden 14 und 15 oder 17 und 18 oder 19 und 20 des Generators für Ultraschallschwingungen 3 oder 4 (siehe Fig. 5, 6, 7, 8, 9). Dabei fließt durch den Generator für Ultraschallschwingungen 3 oder 4 der Strom I.

Durch den Einfluss der Erregerspannung des Generators für Ultraschallschwingungen 3 oder 4 werden im Oszillator 2 des antreibenden Elements asymmetrische Ultraschallresonanzschwingungen erzeugt. Das schwingende antreibende Element 1 wirkt über den Friktionskontakt mit seiner inneren Zylinderoberfläche 7 oder seiner äußeren Zylinderoberfläche 13 auf das angetriebene Element 5 ein und bewirkt dadurch, dass sich das angetriebene Element 5 längs zu seiner Achslinie L bewegt. Die Bewegungsrichtung hängt davon ab, welcher der Generatoren 3 und 4 für Ultraschallschwingungen mit der elektrischen Erregerquelle 12 verbunden ist.

Der Mechanismus, der die Bewegung des antreibenden Elements 1 hervorruft, kann wie folgt erklärt werden. Da die Generatoren für Ultraschallschwingungen 3 und 4 symmetrisch bezogen auf die Schnittebene S (m, n - Spuren der Schnittebene S auf den Zylinderoberflächen 7 und 13), die durch die Mitte der Höhe H des Oszillators 2 (siehe Fig. 3, 4, 11) verläuft, senkrecht zu seiner Achslinie L auf dem Ultraschalloszillator 2 angeordnet sind, dehnt bei einer Erregung eines der Geratoren für Ultraschallschwingungen 3 (oder 4) dieser Generator den Oszillator 2 aus und presst ihn auf nur einer Seite der Schnittebene S zusammen. Der zweite Generator für Ultraschallschwingungen 4 (oder 3) wird nicht angeregt. Deshalb bremst der zweite Generator für Ultraschallschwingungen 3 (oder 4) den Oszillator 2 auf der anderen Seite der Schnittebene S. Das bedeutet, dass der Oszillator 2 asymmetrisch angeregt wird.

Da der Oszillator 2 als dünnwandiger Zylinder ausgeführt ist, breiten sich die Ultraschallschwingungen (Deformationen) nur schlecht vom aktiven Generator für Ultraschallschwingungen 3 (oder 4) zum passiven Generator für Ultraschallschwingungen 4 (oder 3) aus. Deshalb schwingen die Punkte 29, 30 der Oberflächen 7 und 13 auf den Linien 34 und 35, die zur Radialrichtung (Linie 33) des Oszillators 2 (siehe Darstellung 27, 28, Fig. 11) unter dem Winkel α geneigt sind. Der Neigungswinkel α wird durch das Verhältnis D/H bestimmt.

Die Betriebsfrequenz des antreibenden Elements 1 oder die untere Resonanzfrequenz Fₒ des zylindrischen Oszillators 2 (siehe Fig. 10) ist etwa gleich der Resonanzfrequenz der freien Radialschwingungen des Oszillators 2. Jedoch stellt die Form der Schwingungen des Oszillators 2 keine radiale dar, da sich die Punkte seiner Zylinderoberfläche 7, 13 nicht in radialer Richtung, sondern geneigt zur radialen Richtung bewegen. Die aus den Bewegungsbahnen der zwei symmetrischen Punkte 29, 30 und der geraden sie verbindenden Linien gebildete Figur stellt ein Trapez dar. Deshalb kann die im erfindungsgemäßen Ultraschallantrieb erzeugte Schwingungsform jedes der symmetrischen Punktepaare 29 und 30 des Oszillators und die Schwingungsform des gesamten Oszillators 2 als trapezförmige Schwingungsform betrachtet werden (siehe Darstellung 27, 28).

Durch die Trapezform der Schwingungen des Oszillators 2 entsteht eine Längsbewegungskomponente der Punkte (29, 30) der Zylinderoberflächen 7, 13, die längs der Achslinie L gerichtet ist, die wiederum die Längskomponente der Reibungskraft Fₜ hervorruft. Diese Kraft veranlasst das angetriebene Element 5, sich in der mit den Pfeilen 41 in der Darstellung 39, 40 der Fig. 11 angegebenen Richtung zu bewegen. Die Schwingungsamplitude der Punkte (29, 30) der Zylinderoberflächen 7, 13, d.h. ihre Schwingungsgeschwindigkeit V hat ein Maximum Vₘₐₓ auf der Seite des aktiven Generators 3 (4) und ein Minimum Vₘᵢₙ auf der Seite des passiven Generators 4 (3) des Oszillators 2 (siehe Darstellung 36, 37, Fig. 11).
Da im erfindungsgemäßen Antrieb der Oszillator 2 als hohler Zylinder ausgeführt ist, dessen Höhe H gleich oder kleiner als der mittlere Durchmesser D ist, liegt die Resonanzfrequenz der Longitudinalschwingungen, bezogen auf die Zylinderhöhe F1, wesentlich höher (ca. 5 mal) als die Betriebsfrequenz Fₒ des Antriebs. Das ist aus den Abhängigkeiten in Fig. 10 ersichtlich. Deshalb kommt es zu keiner Resonanz der Longitudinalschwingungen, bezogen auf die Höhe im Oszillator 2, weshalb diese Schwingungen nicht zum Betrieb des Antriebs benutzt werden.

Aus diesen Ausführungen geht hervor, dass die trapezförmigen Schwingungen des Oszillators 2, die in ihm auf asymmetrische Weise durch Erregung des einen oder des anderen (3, 4) der symmetrisch angeordneten Generatoren für akustische Schwingungen erzeugt werden, z.B. des Generators 3 (Darstellung 27, Fig. 11), den Grund dar stellen, weshalb sich das angetriebene Element 5 im vorschlagsgemäßen Antrieb bewegt.

Die Erregung des anderen Generators - z.B. des Generators 4 - bewirkt einen Vorzeichenwechsel des Neigungswinkels von α auf -α (siehe Darstellung 28, Fig. 11), was eine Änderung der Bewegungsrichtung des angetriebenen Elementes 5 (siehe Darstellung 38, 39, Fig. 11) des Antriebs zur Folge hat.

Für Oszillatoren 2 mit einem Durchmesser 40 bis 10 mm liegen die Betriebsfrequenzen Fₒ im Bereich von 30 bis 120 KHz. Das bedeutet, dass die antreibenden Elemente 1 des erfindungsgemäßen Antriebs eine etwa Zehnfach größere Schwingungsamplitude (etwa 4 bis 1 Mikrometer) aufweisen als im Vergleich zu den Ultraschalloszillatoren des Antriebs, wie sie aus der Druckschrift DE 10 2004 059 429 B4 bekannt sind.

Der Oszillator 2 des erfindungsgemäßen Antriebs kann unterschiedlich konstruierte Generatoren für Ultraschallschwingungen 3 und 4 aufweisen, wodurch verschiedene Arten zur Schwingungserregung möglich werden. Die in Fig. 5 dargestellte Ausführungsform ermöglicht eine Volumenanregung des Oszillators 2. In der in Fig. 6 dargestellten Ausführungsform befinden sich die Elektroden 14 und 15 nur auf einer Zylinderoberfläche 7 oder 13 des Oszillators 2. In diesem Fall erfolgt eine Oberflächenerregung des Oszillators 2. Durch die Verwendung streifenförmiger Elektroden 17 und 18 ist es möglich, die Erregerspannung bei einer Oberflächenerregung zu verringern. Durch den Einsatz einer Multischichtstruktur (Fig. 8) in Form abwechselnd angeordneter scheibenförmiger Erregerelektroden 19, 20 und scheibenförmiger piezokeramischer Schichten 21 ist es möglich, die Erregereffektivität bei gleichzeitiger Verringerung der Erregerspannung zu erhöhen. Die Verwendung abwechselnd angeordneter aktiver Sektionen 23 und passiver Sektionen 24 (Fig. 9) ist es möglich, im Oszillator 2 zusätzlich Biegeschwingungen zu erzeugen. Dies führt insgesamt zu einer erheblichen Verbesserung des Antriebs.

Die Verwendung einer dünnen abriebfesten Schicht 42 (siehe Darstellung 43, 44, 45, Fig. 12) ermöglicht es, die Abriebfestigkeit der Zylinderoberflächen 7 und 13, die einen Friktionskontakt mit dem angetrieben Element 5 eingehen, zu erhöhen. Die dünne abriebfeste Schicht 42 hat keinen negativen Einfluss auf den Oszillator 2, so dass sie die Form der Schwingungen des Oszillators 2 nicht verzerrt.

Durch die Benutzung ringförmiger Friktionselemente 48 (siehe Darstellung 46, 47, Fig. 12), segmentförmiger Friktionselemente 49 (siehe Darstellung 50, 51, Fig. 12) oder zahnförmig ausgebildeter Friktionselemente 52 (siehe Darstellung 53, 54, Fig. 12) ist es möglich, die Arbeitsressourcen des Antriebs wesentlich zu erhöhen.

Da das antreibende Element 1 mit seiner inneren Zylinderoberfläche 7 oder 13 einen Friktionskontakt mit dem angetriebenen Element 5 eingeht, ist die Fläche des Friktionskontaktes im erfindungsgemäßen Antrieb bedeutend größer als im Vergleich zur Fläche des Friktionskontaktes im Antrieb, der aus der Druckschrift DE 10 2004 059 429 B4 bekannt ist. Dies erhöht wesentlich die Haltekraft beim Einwirken äußerer Stöße wie auch die Genauigkeit des Anhaltens in einer vorgegebenen Position.

In den Ausführungsformen des erfindungsgemäßen Antriebs, in denen das angetriebene Element 5 als Rundstab 55, als Röhre 56, 60 oder als Teil eines Rundstabes 61 oder als Teil einer Röhre 62 (siehe Fig. 13) ausgeführt ist, ist es erforderlich eine Außenkraft anzulegen, die das antreibende Element 1, wie in Fig. 1 dargestellt oder auf eine andere Weise, an das angetriebene Element 5 anpresst.

In den Ausführungsformen des erfindungsgemäßen Antriebs, in denen das angetriebene Element 5 als längs geschnittener Rundstab oder als längs geschnittene Röhre 57, 58, 59 ausgeführt ist, wird die das antreibende Element 1 an das angetriebene Element 5 anpressende Kraft durch die Spannkraft des angetriebenen Elements 5 erzeugt.

Durch den Einsatz langer angetriebener Elemente 5 (55, 56, 57, 58, 59, 60, 61, 62, Fig. 13) ist es möglich, das angetriebene Element 5 als Führung (Fig. 1, 13, 15) zu verwenden. In diesen Linearantrieben kann das antreibende Element 1 als ein sich auf dem angetriebenen Element 5 bewegender Schlitten ausgeführt werden.

Durch den Einsatz kurzer angetriebener Elemente 5 (55, 56, 58, 59, 60, 61, 62, Fig. 13) ist es möglich, flache Linearantriebe mit kleinen Verschiebewegen des angetriebenen Elements (Fig. 2, 16, 17) zu realisieren. In diesen Linearantrieben kann das angetriebene Element 5 aus einer optischen Linse oder eine Linsengruppe 77 bestehen, die das optische Objekt 76 - wie in Fig. 16, 17 dargestellt - auf den optischen Sensor 77 fokussiert. Antriebe mit langen und kurzen angetriebenen Elementen 5 können, wie in Fig. 18 an Hand der Konstruktion des Objektivs gezeigt, miteinander kombiniert werden.

Da im erfindungsgemäßen Antrieb das antreibende Element 1 eine ausreichend große Schwingungsamplitude aufweist (ca. 1 bis 4 Mikrometer), kann das angetriebene Element 5 aus abriebfesten Kunststoffen (z.B. durch Spritzguss) hergestellt werden. Das vereinfacht wesentlich die Technologie zur Herstellung der erfindungsgemäßen Antriebe und ermöglicht eine kostengünstige Fertigung dieser Antriebe.

Da im erfindungsgemäßen Antrieb nur eine Resonanz der Ultraschallschwingungen ausnutzt wird, kann zur automatischen Aufrechterhaltung der Frequenz der elektrischen Erregerspannung U, die gleich der Arbeitsfrequenz Fₒ ist, die elektrische Erregerquelle 12 entsprechend dem Prinzip des selbst erregenden Autogenerators aufgebaut werden, bei der die Erregerfrequenz durch die Resonanzfrequenz des mit ihm verbundenen Generators für Ultraschallschwingungen 3 oder 4 des Oszillators 2 (siehe Fig. 19) vorgegeben wird.

Eine solche Erregerquelle 12 (siehe Fig. 19) funktioniert wie folgt. Beim Einschalten des Antriebs erzeugt die Signalquelle des Rückkopplungskreises 94 ein Rückkopplungssignal, das proportional zur Schwingungsgeschwindigkeit des Oszillators 2 ist. Dabei sind zwei Fälle denkbar:

Im ersten Fall stellt das Rückkopplungssignal eine Spannung dar, die proportional zu dem durch den Oszillator 2 fließenden Strom I ist (Fig. 20).

Im zweiten Fall ist das Rückkopplungssignal eine elektrische Spannung U, die durch die abgeschaltete Elektrode 9 (Fig. 21) generiert wird.

Das Rückkopplungssignal gelangt auf den Eingang des Rückkopplungskreises 86. Nachfolgend wird das Signal durch das Filter 87 gefiltert, seine Phase mittels Phasenschieber 88 korrigiert und die Amplitude durch den Signalverstärker 89 verstärkt. Danach gelangt das Signal über den Ausschalter 90 auf das Verstärkerbauteil 84 des Leistungsverstärkers 83. Der Leistungsverstärker 83 erzeugt eine elektrische Spannung, die durch den Abstimmkreis 85 auf die allgemeine Elektrode 10 des Oszillators 2 gelangt.

Der Phasenschieber 88 und der Signalverstärker 89 halten die Schaltung so in Balance, das bei der Betriebsfrequenz Fₒ die Phasenverschiebung im Rückkopplungskreis gleich Null ist, so das der Verstärkungskoeffizient größer eins ist. Die Einhaltung dieser Balancebedingung wird durch die Erregung der Schaltung bei der Frequenz Fₒ garantiert.

Durch die Ausführung der Erregerquelle 12 als selbst erregender Autogenerator, dessen Erregerfrequenz durch die Resonanzfrequenz des mit ihm verbundenen Generators für Ultraschallschwingungen 3 oder 4 vorgegeben wird, ist es möglich, den Antrieb im einem breiten Temperaturbereich zu stabilisieren. Das Abschalten des Rückkopplungssignals vom Leistungsverstärker 83 durch den Ausschalter 90 hat den Abbruch der Erregung der Schaltung zur Folge hat, was dazu führt, das der Antrieb anhält.
Durch die erfindungsgemäße Erregerquelle 12 ist es möglich, ein, zwei oder mehrere der antreibenden Elemente 1, so wie in Fig. 19 dargestellt, mit ihr zu verbinden.

Jeder der Generatoren 3 oder 4 von jedem der antreibenden Elemente 1 wird durch den Umschalter 92 verbunden, und zwar durch das Anlegen einer Steuerspannung an seine Steuereingänge 93 mit der Erregerquelle 12.
Wenn der erfindungsgemäße Antrieb mit einer digitalen Nachstimmeinrichtung 97 ausgerüstet ist, kann die Position des angetriebenen Elementes in einem solchen Antrieb genau vorgegeben werden. Dazu wird an die Steuereingänge 98 ein den Antrieb einschaltendes Signal gelegt und an die Positionierungseingänge 99 gelangt ein vom Sensor 77 oder dem Positionssgeber des angetriebenen Elementes 5 (Geber in der Fig. 22 nicht enthalten) erzeugtes Signal, das den Antrieb anhält.

Nachfolgend wird der positive Effekt beschrieben, der durch die Lösung der eingangs gestellten Aufgaben erzielt wird.

Da das antreibende Element des erfindungsgemäßen Antriebs als dünner hohler Zylinder ausgeführt ist, ist es möglich, das das antreibende Element das angetriebene Element mit umfasst, wodurch es wiederum möglich ist, das Volumen des Antriebs zu verringern. Da im erfindungsgemäßen Antrieb die Höhe des zylinderförmigen antreibenden Elementes gleich oder kleiner als sein Durchmesser ist, ist es möglich, flache Geräte zu bauen. Beides ist besonders wichtig für Geräte mit optischen Systemen, die beispielsweise in mobilen Endbenutzergeräten wie etwa in Mobiltelefonen oder Kameras eingesetzt werden.

Der erfindungsgemäße Antrieb besitzt zudem eine wesentlich größere Haltekraft als die bekannten Geräte. Das bedeutet, dass ein solcher Antrieb bedeutend widerstandsfähiger gegenüber äußeren Stößen als die bekannten Geräte ist. Durch die große Haltekraft ist es außerdem möglich, eine höhere Genauigkeit beim Anhalten des angetriebenen Elementes zu erreichen als es bei bekannten Antrieben möglich ist. Dies ist besonders für den Einsatz des Antriebs in Systemen mit exakter Positionierung wichtig.
Die große Haltekraft erhöht die Betriebssicherheit des Antriebs.

Da der erfindungsgemäße Antrieb darüber hinaus eine kleinere Betriebsfrequenz hat, führt dies zur Erhöhung der Schwingungsamplitude des antreibenden Elements. Durch die größere Schwingungsamplitude ist es möglich, aus Kunststoffen gefertigte angetriebene Elemente zu verwenden. Letzteres vereinfacht wesentlich die Technologie zur Herstellung der Antriebe und verringert somit ihre Fertigungskosten. Zusätzlich verringern sich durch die niedrigere Betriebsfrequenz die elektrischen Verluste in der Erregerquelle.
Des Weiteren erzeugt der erfindungsgemäße Antrieb keine akustischen Geräusche, wie dies bei Antrieben mit Zahnradgetrieben der Fall ist. Alle aufgezählten positiven Effekte tragen somit wesentlich dazu bei, dass Einsatzspektrum des erfindungsgemäßen linearen Ultraschallantriebs zu erweitern.

### Bezugszeichenliste

- 1: antreibendes Element
- 2: Ultraschalloszillator des antreibenden Elements 1
- 3, 4: Generatoren der Ultraschallschwingungen des Oszillators 2
- 5: angetriebenes Element
- 6: Stützen
- 7: innere Zylinderoberfläche des antreibenden Elements 1 (Oszillator 2)
- 8: La st
- 9, 10: Anschlüsse der Generatoren 3, 4
- 11: Richtungswahlschalter
- 12: elektrische Erregerquelle des antreibenden Elements 1 (Oszillator 2)
- 13: äußere Zylinderoberfläche des antreibenden Elements 1 (Oszillator 2)
- 14: ringförmige Erregerelektrode des Generators 3 oder 4
- 15: allgemeine Elektrode der Generatoren 3, 4
- 16: Stirnflächen des Oszillators 2
- 17, 18: streifenförmige Elektroden der Generatoren 3 und 4
- 19: scheibenförmige Erregerelektroden der Generatoren 3 und 4
- 20: allgemeine scheibenförmige Elektroden der Generatoren 3 und 4
- 21: scheibenförmige piezokeramische Schichten
- 22: Darstellung zur Erläuterung der Polarisationsrichtung der piezokeramischen Schichten
- 23: aktive Sektionen der Generatoren 3 und 4
- 24: passive Sektionen der Generatoren 3 und 4
- 25: Darstellung zur Erläuterung der Frequenzabhängigkeit des Widerstandes Z der Generatoren 3 und 4
- 26: Darstellung zur Erläuterung der Frequenzabhängigkeit der Phasenverschiebung zwischen der elektrischen Spannung und dem Strom des Generators 3 oder 4
- 27, 28: Radialschnitte des Oszillators 2
- 29, 30: Punkte der zylindrischen Oberflächen 7, 13 des Oszillators
- 31, 32: Bewegungsbahnen der Punkte 29, 30
- 33: Linien zur Angabe der Radialrichtung
- 34, 35: Linien zur Angabe der Bewegungsrichtung der Punkte 29, 30
- 36, 37: Darstellungen zur Erläuterung der Grafik der Abhängigkeit der Schwingungsgeschwindigkeit V der Punkte 7 oder 13 von ihrer Lage längs zur der Höhe H des Oszillators 2
- 38, 39: Darstellungen zur Erläuterung der Bewegungsrichtung der angetriebenen Elemente 5
- 40, 41: Pfeile zur Erläuterung der Bewegungsrichtung der angetriebenen Elemente 5
- 42: abriebfeste Schicht
- 43, 44, 45: Darstellung zur Erläuterung der Konfiguration der abriebfesten Schicht 42
- 46, 47: Darstellungen zur Erläuterung der Konfiguration der Friktionselemente 48
- 48: ringförmige Friktionselemente des Oszillators 2
- 49: segmentförmige Friktionselemente des Oszillators 2
- 50, 51: Darstellungen zur Erläuterung der Konfiguration der segmentförmigen Friktionselemente 49 des Oszillators 2
- 52: zahnförmige Friktionselemente des Oszillators 2
- 53, 54: Darstellungen zur Erläuterung der Konfiguration der zähneförmigen Friktionselemente des Oszillators 2
- 55-62: Darstellungen zur Erläuterung möglicher Formen langer angetriebener Elemente
- 63-69: Darstellungen zur Erläuterung möglicher Formen kurzer angetriebener Elemente
- 70, 71, 72: Konstruktionsvarianten des erfindungsgemäßen Antriebs
- 73: Halter
- 74: schallisolierende Zwischenlage
- 75: optische Linse oder eine Gruppe optischer Linsen
- 76: optisches Objekt
- 77: optoelektrischer Sensor
- 78: Gehäuse des optischen Objektivs
- 79, 80: Ultraschallantriebe des optischen Objektivs
- 81: fokussierende Linsengruppe
- 82: Zoom-Linsengruppe
- 83: Leistungsverstärker
- 84: Verstärkerbauteil des Leistungsverstärkers 83
- 85: Abstimmkreis des Leistungsverstärkers 83
- 86: Rückkopplungskreis
- 87: Filter des Rückkopplungskreises 86
- 88: Phasenschieber des Rückkopplungskreises 86
- 89: Signalverstärker des Rückkopplungskreises 86
- 90: Ausschalter des Rückkopplungskreises 86
- 91: Steuereingang des Ausschalters 90
- 92: Umschalter 11
- 93: Steuereingänge des Umschalters 1194 Signalquelle des Rückkopplungskreises
- 95: Widerstand der Signalquelle 94
- 96: Kondensator der Signalquelle 94
- 97: digitale Nachstimmeinrichtung
- 98: Steuereingänge der digitalen Nachstimmeinrichtung
- 99: Positionierungseingänge der digitalen Nachstimmeinrichtung

## Patentansprüche

1. Ultraschalllinearantrieb bestehend aus einem antreibenden Element (1) als Ultraschalloszillator (2) mit zwei Generatoren (3, 4) für Ultraschallschwingungen und einem angetriebenen Element (5), das einen Friktionskontakt mit dem antreibenden Element (1) bildet und einer elektrischen Erregerquelle (12) des antreibenden Elements (1), **dadurch gekennzeichnet,**
**dass** der Ultraschalloszillator (2) als hohler piezoelektrischer Zylinder ausgeführt ist, dessen Höhe H gleich oder kleiner seinem mittleren Durchmesser D ist und dessen Wanddicke d 5 - 20 mal kleiner als sein mittlerer Durchmesser D ist, und die Generatoren (3, 4) für Ultraschallschwingungen symmetrisch zu beiden Seiten bezogen auf die Schnittebene S, die durch die Mitte der Höhe des Ultraschalloszillators (2) senkrecht zu seiner Achslinie L verläuft, angeordnet sind, wobei das antreibende Element (1) mit seiner Zylinderoberfläche in Kontakt mit dem angetriebenen Element (5) steht, und die elektrische Erregerquelle (12) derart mit dem Ultraschalllinearantrieb verbunden ist, dass dieses nur den ersten oder den zweiten Generator (3, 4) für Ultraschallschwingungen anregt.

2. Ultraschalllinearantrieb nach Anspruch 1,
**dadurch gekennzeichnet, dass**
das antreibende Element (1) mit seiner inneren Zylinderoberfläche (7) einen Friktionskontakt mit dem angetrieben Element (5) bildet.

3. Ultraschalllinearantrieb nach Anspruch 1,
**dadurch gekennzeichnet, dass**
das antreibende Element (1) mit seiner äußeren Zylinderoberfläche (13) einen Friktionskontakt mit dem angetrieben Element (5) bildet.

4. Ultraschalllinearantrieb nach zumindest einem der Ansprüche 1 bis 3,
**dadurch gekennzeichnet, dass**
jeder der Generatoren (3, 4) für Ultraschallschwingungen als angeregte ringförmige Elektrode (14) und als allgemeine ringförmige Elektrode (15) ausgeführt ist, wobei die Erregerelektroden (14) auf einer der Zylinderoberflächen des radial polarisierten Oszillators symmetrisch zu beiden Seiten der Schnittebene S angeordnet sind und die allgemeine Elektrode (15) unter den Erregerelektroden (14) auf der anderen Zylinderoberfläche des Oszillators angeordnet ist.

5. Ultraschalllinearantrieb nach zumindest einem der Ansprüche 1 bis 3,
**dadurch gekennzeichnet, dass**
jeder der Generatoren (3, 4) für Ultraschallschwingungen als angeregte ringförmige Elektrode (14) und als angeregte allgemeine ringförmige Elektrode (15) ausgeführt ist, wobei die Erregerelektroden (14) auf einer der Zylinderoberflächen des längs polarisierten Oszillators nah zu seinen Stirnflächen (16) und symmetrisch zur Schnittebene angeordnet sind und die allgemeine Elektrode (15) auf der gleichen Oberfläche des Oszillators an seiner Schnittstelle mit der Schnittebene angeordnet ist.

6. Ultraschalllinearantrieb nach zumindest einem der Ansprüche 1 bis 3,
**dadurch gekennzeichnet, dass**
jeder der Generatoren (3, 4) für Ultraschallschwingungen als sich abwechselnde streifenförmige Elektroden (17, 18) ausgeführt ist, die auf einer Zylinderoberfläche des alternierend in Längsrichtung polarisierten Oszillators angeordnet sind.

7. Ultraschalllinearantrieb nach zumindest einem der Ansprüche 1 bis 3,
**dadurch gekennzeichnet, dass**
jeder der Generatoren (3, 4) für Ultraschallschwingungen aus gleichachsig angeordneten scheibenförmigen Elektroden (19) besteht, die sich mit scheibenförmigen Schichten (21) in Längsrichtung polarisierter piezoelektrischer Keramik abwechseln.

8. Ultraschalllinearantrieb nach zumindest einem der Ansprüche 1 bis 7,
**dadurch gekennzeichnet, dass**
jeder der Generatoren (3, 4) für Ultraschallschwingungen aus einer geraden Anzahl sich abwechselnder aktiver (23) und passiver (24) Sektionen besteht.

9. Ultraschalllinearantrieb nach zumindest einem der Ansprüche 1 bis 8,
**dadurch gekennzeichnet, dass**
der Generator für Ultraschallschwingungen auf einer seiner Zylinderoberflächen eine abriebfeste Schicht (42) aufweist, mit der er einen Friktionskontakt mit dem angetriebenen Element (5) bildet.

10. Ultraschalllinearantrieb nach zumindest einem der Ansprüche 1 bis 8,
**dadurch gekennzeichnet, dass**
der Generator für Ultraschallschwingungen ein oder zwei ringförmige Friktionselemente (48) aufweist, mit denen er einen Friktionskontakt mit dem angetriebenen Element (5) bildet.

11. Ultraschalllinearantrieb nach zumindest einem der Ansprüche 1 bis 8,
**dadurch gekennzeichnet, dass**
der Generator für Ultraschallschwingungen eine oder mehrere segmentförmige Friktionselemente (49) aufweist, mit denen er einen Friktionskontakt mit dem angetriebenen Element (5) bildet.

12. Ultraschalllinearantrieb nach zumindest einem der Ansprüche 1 bis 11,
**dadurch gekennzeichnet, dass**
das angetriebene Element (5) die Form eines Rundstabes (55) oder eine Röhre (56) besitzt und die Teile eines Rundstabes oder einer Röhre (63) oder des längsgeschnittenen Rundstabes oder der längsgeschnittenen Röhre (57, 58, 59, 60) oder der längsgeschnittenen Teile des Rundstabes (61) oder längsgeschnittenen Teile der Röhre (62) aufweist.

13. Ultraschalllinearantrieb nach zumindest einem der Ansprüche 1 bis 12,
**dadurch gekennzeichnet, dass**
das angetriebene Element (5) einen abriebfesten Kunststoff aufweist und vorzugsweise aus diesem besteht.

14. Ultraschalllinearantrieb nach zumindest einem der Ansprüche 1 bis 13,
**dadurch gekennzeichnet, dass**
sich im Inneren des angetriebenen (5) oder des antreibenden (1) Elements eine optische Linse oder eine optische Linsengruppe oder ein anderes angetriebenes Teil eines Geräts befindet.

15. Ultraschalllinearantrieb nach zumindest einem der Ansprüche 1 bis 14,
**dadurch gekennzeichnet, dass**
die Erregerquelle (12) des antreibenden Elements (1) als selbst erregender Autogenerator ausgeführt ist, dessen Erregerfrequenz durch die Resonanzfrequenz des mit ihm verbundenen Generators für Ultraschallschwingungen des erregten Oszillators vorgegeben ist.

16. Ultraschalllinearantrieb nach zumindest einem der Ansprüche 1 bis 15,
**dadurch gekennzeichnet, dass**
dieser mit einer digitalen Nachstimmeinrichtung (97) der elektrischen Erregerquelle (12), die die Position des angetriebenen Elements (5) vorgibt, ausgestattet ist.

## Claims

1. Ultrasonic linear drive, comprising a driving element (1) as ultrasonic oscillator (2) with two generators (3, 4) for ultrasonic oscillations, and a driven element (5) which produces a frictional contact with the driving element (1), and an electrical excitation source (12) for the driving element (1),
**characterized in that**
the ultrasonic oscillator (2) is configured as a hollow piezoelectric cylinder the height H of which is equal to or smaller than the mean diameter D thereof and the wall thickness d of which is 5 to 20 times smaller than the mean diameter D thereof, and the generators (3, 4) for ultrasonic oscillations are symmetrically disposed on both sides relative to the sectional plane S which extends through the center of the height of the ultrasonic oscillator (2) perpendicular to the center line L thereof, wherein the cylinder surface of the driving element (1) is in contact with the driven element (5) and the electrical excitation source (12) is connected to the ultrasonic linear drive to excite only the first or the second generator (3, 4) for ultrasonic oscillations.

2. Ultrasonic linear drive according to claim 1,
**characterized in that**
the driving element (1) produces with its inner cylindrical surface (7) a frictional contact with the driven element (5).

3. Ultrasonic linear drive according to claim 1,
**characterized in that**
the driving element (1) produces with its outer cylindrical surface (13) a frictional contact with the driven element (5).

4. Ultrasonic linear drive according to at least one of claims 1 to 3,
**characterized in that**
each of the generators (3, 4) for ultrasonic oscillations is configured as an excited annular electrode (14) and a general annular electrode (15), wherein the excitation electrodes (14) are disposed on one of the cylindrical surfaces of the radially polarized oscillator, symmetrically on both sides of the sectional plane S, and the general electrode (15) is disposed underneath the excitation electrodes (14) on the other cylindrical surface of the oscillator.

5. Ultrasonic linear drive according to at least one of claims 1 to 3,
**characterized in that**
each of the generators (3, 4) for ultrasonic oscillations is configured as an excited annular electrode (14) and an excited general annular electrode (15), wherein the excitation electrodes (14) are disposed on one of the cylindrical surfaces of the longitudinally polarized oscillator near the end faces (16) thereof and symmetrically with respect to the sectional plane, and the general electrode (15) is disposed on the same surface of the oscillator at its point of intersection with the sectional plane.

6. Ultrasonic linear drive according to at least one of claims 1 to 3,
**characterized in that**
each of the generators (3, 4) for ultrasonic oscillations is configured in the form of alternate strip-shaped electrodes (17, 18), which are disposed on a cylindrical surface of the oscillator alternately polarized in the longitudinal direction.

7. Ultrasonic linear drive according to at least one of claims 1 to 3,
**characterized in that**
each of the generators (3, 4) for ultrasonic oscillations is comprised of coaxially disposed disc-shaped electrodes (19), which take turns with disc-shaped layers (21) of piezoelectric ceramics polarized in the longitudinal direction.

8. Ultrasonic linear drive according to at least one of claims 1 to 7,
**characterized in that**
each of the generators (3, 4) for ultrasonic oscillations is formed of an even number of alternate active (23) and passive sections (24).

9. Ultrasonic linear drive according to at least one of claims 1 to 8,
**characterized in that**
the generator for ultrasonic oscillations has an abrasion-resistant layer (42) on one of its cylindrical surfaces by means of which it produces a frictional contact with the driven element (5).

10. Ultrasonic linear drive according to at least one of claims 1 to 8,
**characterized in that**
the generator for ultrasonic oscillations has one or two annular friction elements (48) by means of which it produces a frictional contact with the driven element (5).

11. Ultrasonic linear drive according to at least one of claims 1 to 8,
**characterized in that**
the generator for ultrasonic oscillations has one or more segment-shaped friction elements (49) by means of which it produces a frictional contact with the driven element (5).

12. Ultrasonic linear drive according to at least one of claims 1 to 11,
**characterized in that**
the driven element (5) has the shape of a round rod (55) or a tube (56) and comprises the parts of a round rod or a tube (63) or of the longitudinally cut round rod or the longitudinally cut tube (57, 58, 59, 60) or the longitudinally cut parts of the round rod (61) or longitudinally cut parts of the tube (62).

13. Ultrasonic linear drive according to at least one of claims 1 to 12,
**characterized in that**
the driven element (5) includes an abrasion-resistant plastic material and is preferably made of same.

14. Ultrasonic linear drive according to at least one of claims 1 to 13,
**characterized in that**
an optical lens or an optical lens group or another driven part of an apparatus is disposed inside the driven element (5) or the driving element (1).

15. Ultrasonic linear drive according to at least one of claims 1 to 14,
**characterized in that**
the excitation source (12) for the driving element (1) is configured as a self-exciting autogenerator, whose excitation frequency is predefined by the resonance frequency of the generator for ultrasonic oscillations of the excited oscillator connected to same.

16. Ultrasonic linear drive according to at least one of claims 1 to 15,
**characterized in that**
the ultrasonic linear drive is equipped with a digital frequency controller (97) for the electrical excitation source (12), which predefines the position of the driven element (5).

## Revendications

1. Entraînement linéaire à ultrasons constitués d'un élément menant (1) sous forme d'un oscillateur à ultrasons (2) avec deux générateurs (3, 4) pour oscillations ultrasonores, et d'un élément mené (5), qui forme un contact à friction avec l'élément menant (1), et d'une source d'excitation électrique (12) de l'élément menant (1), **caractérisé en ce que** l'oscillateur à ultrasons (2) est réalisé sous forme de cylindre piézo-électrique creux dont la hauteur H est égale ou inférieure à son diamètre moyen D et dont l'épaisseur d de sa paroi est de 5 à 20 fois plus petite que son diamètre moyen D, et les générateurs (3, 4) pour oscillations ultrasonores sont agencés symétriquement des deux côtés, par référence au plan de coupe S qui s'étend à travers le milieu de la hauteur de l'oscillateur à ultrasons (2) perpendiculairement à sa ligne axiale L, dans lequel l'élément menant (1) est en contact avec l'élément mené (5) avec sa surface cylindrique, et la source d'excitation électrique (12) est reliée à l'entraînement linéaire à ultrasons de telle façon que celui-ci excite seulement le premier ou le second générateur (3, 4) pour oscillations ultrasonores.

2. Entraînement linéaire à ultrasons selon la revendication 1,
**caractérisé en ce que** l'élément menant (1) forme un contact à friction avec l'élément mené (5) au moyen de sa surface cylindrique intérieure (7).

3. Entraînement linéaire à ultrasons selon la revendication 1,
**caractérisé en ce que** l'élément menant (1) forme un contact à friction avec l'élément mené (5) au moyen de sa surface cylindrique extérieure (13).

4. Entraînement linéaire à ultrasons selon l'une au moins des revendications 1 à 3, **caractérisé en ce que**
chacun des générateurs (3, 4) pour oscillations ultrasonores est réalisé sous forme d'électrode annulaire excitée (14) et sous forme d'électrodes annulaire générale (15), dans lequel les électrodes excitées (14) sont agencées symétriquement des deux côtés du plan de coupe S sur l'une des surfaces cylindriques de l'oscillateur polarisé radialement, et l'électrode générale (15) est agencée au-dessous des électrodes excitées (14) sur l'autre surface cylindrique de l'oscillateur.

5. Entraînement linéaire à ultrasons selon l'une au moins des revendications 1 à 3, **caractérisé en ce que**
chacun des générateurs (3, 4) pour oscillations ultrasonores est réalisé sous forme d'électrode annulaire excitée (14) et sous forme d'électrode annulaire générale excitée (15), dans lequel les électrodes excitées (14) sont agencées sur l'une des surfaces cylindriques de l'oscillateur polarisé en longueur, à proximité de ses surfaces frontales (16) et symétriquement par rapport au plan de coupe, et l'électrode générale (15) est agencée sur la même surface de l'oscillateur au niveau de son interface avec le plan de coupe.

6. Entraînement linéaire à ultrasons selon l'une au moins des revendications 1 à 3, **caractérisé en ce que**
chacun des générateurs (3, 4) pour oscillations ultrasonores est réalisé sous forme d'électrodes alternées en forme de bande (17, 18), qui sont agencées sur une surface cylindrique de l'oscillateur polarisé alternant en direction longitudinale.

7. Entraînement linéaire à ultrasons selon l'une au moins des revendications 1 à 3, **caractérisé en ce que**
chacun des générateurs (3, 4) pour oscillations ultrasonores est constitué d'électrodes en forme de disque (19) agencées de manière coaxiale, qui alternent avec des couches en forme de disque (21) de céramique piézo-électrique polarisée en direction longitudinale.

8. Entraînement linéaire à ultrasons selon l'une au moins des revendications 1 à 7, **caractérisé en ce que**
chacun des générateurs (3, 4) pour oscillations ultrasonores est constitué d'un nombre pair de sections actives (23) et passives (24) alternantes.

9. Entraînement linéaire à ultrasons selon l'une au moins des revendications 1 à 8, **caractérisé en ce que**
le générateur pour oscillations ultrasonores comprend sur l'une de ses surfaces cylindriques une couche résistante à l'abrasion (42), au moyen de laquelle il forme un contact à friction avec l'élément mené (5).

10. Entraînement linéaire à ultrasons selon l'une au moins des revendications 1 à 8, **caractérisé en ce que**
le générateur pour oscillations ultrasonores comprend un ou deux éléments à friction (48) de forme annulaire, au moyen desquels il forme un contact à friction avec l'élément mené (5).

11. Entraînement linéaire à ultrasons selon l'une au moins des revendications 1 à 8, **caractérisé en ce que**
le générateur pour oscillations ultrasonores comprend un ou plusieurs éléments à friction (49) en forme de segments, au moyen desquels il forme un contact à friction avec l'élément mené (5).

12. Entraînement linéaire à ultrasons selon l'une au moins des revendications 1 à 11, **caractérisé en ce que**
l'élément mené (5) possède la forme d'un barreau arrondi (5) ou d'un tube (56) et comprend les parties d'un barreau arrondi ou d'un tube (63) ou du barreau arrondi sectionné en longueur ou du tube sectionné en longueur (57, 58, 59, 60) ou des parties sectionnées en longueur du barreau arrondi (61) ou des parties sectionnées en longueur du tube (62).

13. Entraînement linéaire à ultrasons selon l'une au moins des revendications 1 à 12, **caractérisé en ce que**
l'élément mené (5) comporte une matière plastique résistante à l'abrasion, et est de préférence constituée de celle-ci.

14. Entraînement linéaire à ultrasons selon l'une au moins des revendications 1 à 13, **caractérisé en ce que**
une lentille optique ou un groupe de lentilles optiques ou encore une autre partie menée d'un appareil, se trouve à l'intérieur de l'élément mené (5) ou de l'élément menant (1).

15. Entraînement linéaire à ultrasons selon l'une au moins des revendications 1 à 14, **caractérisé en ce que**
la source d'excitation (12) de l'élément menant (1) est réalisée sous forme d'autogénérateur à auto excitation, dont la fréquence d'excitation est imposée par la fréquence de résonance du générateur pour oscillations ultrasonores, relié à lui-même, de l'oscillateur excité.

16. Entraînement linéaire à ultrasons selon l'une au moins des revendications 1 à 15, **caractérisé en ce que** celui-ci est équipé d'un système de réajustement numérique (97) de la source d'excitation électrique (12), qui impose la position de l'élément mené (5).
